# EUROPÄISCHE PATENTANMELDUNG

(11) **EP 3 173 213 A1**
(43) Veröffentlichungstag der Anmeldung: **31.05.2017**
(21) Anmeldenummer: 16455007.1
(22) Anmeldetag: 29.11.2016
(51) Int. Cl.: B29C 63/00

(54) **VORRICHTUNG ZUR BERÜHRUNGSLOSEN OBERFLÄCHENERWÄRMUNG VON UMMANTELTEN BAUTEILEN**

(30) Priorität: 30.11.2015 AT 510242015
(71) Anmelder: Pha, Socheat, 8073 Feldkirchen bei Graz (AT)
(72) Erfinder: Pha, Socheat, 8073 Feldkirchen bei Graz (AT)
(74) Vertreter: Puchberger & Partner Patentanwälte

(57) **Zusammenfassung**

Vorrichtung zur berührungslosen Oberflächenerwärmung von ummantelten Bauteilen, vorzugsweise Lederlenkrädern, durch Infrarotstrahlung wobei die Vorrichtung einen beweglichen Oberteil und einen starren Unterteil sowie eine heb- und senkbare Bauteilaufnahmevorrichtung umfasst, wobei im Oberteil eine obere Strahlergruppe und im Unterteil eine untere Strahlergruppe angeordnet ist.

## Beschreibung

Die Erfindung betrifft eine Vorrichtung zur berührungslosen Oberflächenerwärmungen von ummantelten Bauteilen, vorzugsweise Lederlenkrädern, durch Infrarotstrahlung.

Aus dem Stand der Technik bekannte Herstellungsverfahren für materialbezogene Bauteile, vorzugsweise für Lenkräder, welche mit Leder, Spaltleder, Kunstleder, Stoffe oder auch anderen Verbundstoffen bezogen sein können, erfordern meist, die Ummantelung, welche auf einen weichen Untergrund (Kunststoffaufbau) bespannt wird, mittels Warmluftzufuhr (Föhn) und manueller Glättbearbeitung (Bügeln) zur ästhetischen Qualitätsverbesserung nachzubehandeln.

Zum besseren Verständnis wird das Verfahren zur Herstellung eines ummantelten Bauteils, in diesem Fall eines ummantelten Lenkrades, nachfolgend dargestellt.

Über einem Metallskelett wird ein "griffweicher" Kunststoffaufbau aufgebracht, insbesondere gespritzt, gegossen oder dergleichen. Dieser wird mit einem Materialbezug bespannt und verklebt.

Zu diesem Zweck ist es bei aus dem Stand der Technik bekannten Verfahren erforderlich, den aus der Form entnommenen Rohling, der mit Rückständen von Trennmitteln kontaminiert ist, gründlich, aufgrund der Form manuell, aufzurauen, um eine gute Verbindung des eingebrachten Klebers zur Befestigung der Ummantelung zu gewährleisten. Im Anschluss daran wird die Ummantelung aus Bezugsmaterial zu einer Einheit vernäht oder als einteiliger Bezug über den mit Kleber beschichteten Schaumkern gezogen und am inneren Umfang des Lenkrades manuell gespannt und vernäht oder verkeilt. Um den ästhetischen Qualitätsanforderungen gerecht zu werden, muss die Ummantelung, welche durch Aufziehen und vernähen oder verkeilen mehr oder weniger Falten aufweist, geglättet werden.

Die Glättung der Ummantelung, insbesondere Leder, erfolgt nach dem Stand der Technik im Wesentlichen manuell und ist sehr zeit- und kostenintensiv. Mittels Erwärmung durch Heißluft über einen manuell betätigten oder ortsfesten Heißluftstroms, insbesondere eines Föhns, wird die Ummantelung erwärmt und dadurch geschmeidig gemacht. Durch Ausstreichen der Falten mittels eines Knochengriffels werden dann die Falten mechanisch durch die Berührung geglättet. Durch die aus dem Stand der Technik bekannten Verfahren und Vorrichtungen kann eine unkontrollierte Temperatureinbringung und damit die Beschädigung der Ummantelung und/oder des Nähgarns, welches zum Ausschluss des jeweiligen Stückes führt, nicht kontrolliert werden.

Aufgabe der Erfindung ist es nun, die Nachteile des Standes der Technik zu überwinden. Unter anderem ist es Aufgabe der Erfindung, die Temperatureinbringung zu kontrollieren, die Zeit für die Erwärmung zu verkürzen und die Kosten für die Nachbehandlung ummantelter Werkstücke zu senken.

Die erfindungsgemäße Aufgabe wird dadurch gelöst, dass die Vorrichtung einen beweglichen Oberteil, einen starren Unterteil sowie eine heb- und senkbare Bauteilaufnahmevorrichtung umfasst, wobei im Oberteil eine obere Strahlergruppe und im Unterteil eine untere Strahlergruppe angeordnet ist. Dabei kann der Begriff Strahlergruppe insbesondere einen oder auch mehrere Strahler bezeichnen.

Diese neuartige Vorrichtung arbeitet grundsätzlich berührungslos mittels kurz-, lang- oder mittelwelliger Infrarot-Strahler mit einem definierten Abstrahlwinkel. Dieser Abstrahlwinkel wird vorzugsweise mittels einer Rückenbeschichtung des Strahler-Rohres aus Keramik-, Gold- oder Rubinwerkstoff realisiert.

Gegebenenfalls sind die Strahler entsprechend der Formkontur des Bauteils, beispielsweise des Lenkrads geformt und angeordnet und gegebenenfalls mit geraden Strahlern kombiniert, sodass somit eine gleichmäßige, berührungslose Erwärmung über die gesamte Bauteiloberfläche, vorzugsweise Lenkradoberfläche, gewährleistet ist.

Gegebenenfalls kann die Oberflächentemperatur kontinuierlich über berührungslose Temperaturfühler kontrolliert werden und die daraus resultierenden Parameter können zu einer Erwärmungsoptimierung bei kürzest möglicher Heizzeit verarbeitet werden. Die Werte dieser Erkenntnisse können nun für entsprechende Rezepturen in Relation zu den zu verarbeitenden Materialien verwendet werden. Diese Rezepturen können dann jeweils dem spezifischen Bauteil bzw. Ummantelungsmaterial zugeordnet und abgerufen werden.

Ein weiterer Vorteil dieser neuartigen Vorrichtung ist die Möglichkeit der Verwendung von wasserbasierenden Klebern. Erst durch eine gezielte Wärmeeinwirkung, wie sie bei der Anordnung der berührungslos arbeitenden Infrarot-Strahlern möglich ist, wird der Kleber zum Verbinden der Materialien aktiviert. Der Kleber wird auf der Innenseite des Konturmaterialzuschnittes aufgebracht und angetrocknet. Der Konturmaterialzuschnitt wird über die Bauteil-Außenkontur (vorzugsweise Lenkrad-Außenkontur) gezogen, gespannt und manuell vernäht oder verkeilt. Durch die gezielte und gut dosierbare Wärmeeinwirkung wird der Kleber erst aktiviert und geht eine Verbindung mit der Oberfläche der Werkstückumschäumung, vorzugsweise Lenkradumschäumung, ein, wobei das gebundene Wasser und auch die Trennmittelrückstände verdampfen. Aufgrund dieser Technologie kann auch die mühsame und zeitaufwändige manuelle Aufrauhung als Arbeitsgang völlig entfallen.

Gegenstand der vorliegenden Erfindung ist somit unter anderem die neuartige Anwendung von Infrarot-Strahlern zur Oberflächenglättung von materialüberzogenen Bauteilen sowie der gleichzeitigen Aktivierung der Verklebung mit dem ummantelten Untergrund. Mit der erfindungsgemäßen Vorrichtung kann die Taktzeit für die Herstellung eines Lenkrades bei geringerem Personaleinsatz wesentlich reduziert werden.

Erfindungsgemäß kann vorgesehen sein, dass durch die heb- und senkbare Ausführung der Bauteilaufnahme und der sowohl im starren Unterteil der Vorrichtung und der im beweglichen Oberteil angeordneten Strahlergruppe eine völlige Umschließung des Bauteils erreicht wird.

Erfindungsgemäß kann vorgesehen sein, dass durch die spezielle Ausführung und Positionsveränderung der Bauteilaufnahme beim Öffnen der Vorrichtung sowohl eine manuelle als auch eine automatisierte Bauteilzufuhr ermöglicht wird.

Erfindungsgemäß kann vorgesehen sein, dass bei der Straffung der Ummantelung durch die Erwärmung gleichzeitig ein Kleber zur Verbindung des Bauteilkernes mit der Ummantelung aktiviert wird.

Erfindungsgemäß kann vorgesehen sein, dass der Bauteil bei Bedarf während und nach der Bestrahlung im Inneren der Vorrichtung mit Dampf beaufschlagt wird.

Erfindungsgemäß kann vorgesehen sein, dass die Strahler der exakten Kontur des zu bestrahlenden Bauteiles nachgeformt und bauteiloptimiert angeordnet sind.

Erfindungsgemäß kann vorgesehen sein, dass neben oder statt der konturgeformten Infrarot-Strahler auch gerade, also lineare Infrarot-Strahler zum Einsatz gelangen.

Erfindungsgemäß kann vorgesehen sein, dass auch eine teilweise Behandlung eines Bauteils, z. B. Segmente wie Unter- und Oberseite oder qualitätsrelevanter Teilbereiche getrennt möglich ist.

Erfindungsgemäß kann vorgesehen sein, dass durch berührungslose Temperaturfühler die Oberflächentemperatur während der Bestrahlung kontinuierlich überwacht und protokolliert wird und somit eine optimierte Programmrezeptur für das jeweilige Bauteil mit optimierter Heizintensität und Heizzeit ermittelt wird.

Erfindungsgemäß kann vorgesehen sein, dass mittels einer Überwachungskamera ein Oberflächenabgleich mit einem abgespeicherten Masterstück vorgenommen werden kann und automatisch eine Nachkorrektur durchgeführt wird.

Erfindungsgemäß kann vorgesehen sein, dass mittels einer installierten Überwachungskamera ein Belegfoto als Qualitätsbeweis erstellt wird.

Erfindungsgemäß kann vorgesehen sein, dass mindestens ein Strahler der oberen Strahlergruppe als Infrarotstrahler, Heißluftdüse oder dergleichen ausgeführt ist.

Erfindungsgemäß kann vorgesehen sein, dass mindestens ein Strahler der unteren Strahlergruppe als Infrarotstrahler, Heißluftdüse oder dergleichen ausgeführt ist.

Erfindungsgemäß kann vorgesehen sein, dass die obere Strahlergruppe mindestens einen im Wesentlichen kreisförmigen, kreisabschnittförmigen oder linearen Strahler umfasst. Erfindungsgemäß kann vorgesehen sein, dass die untere Strahlergruppe mindestens einen im Wesentlichen kreisförmigen, kreisabschnittförmigen oder linearen Strahler umfasst.

Erfindungsgemäß kann vorgesehen sein, dass die obere Strahlergruppe mehrere im Wesentlichen kreisförmige Strahler, die vorzugsweise konzentrisch in unterschiedlichen Ebenen zueinander angeordnet sind, umfasst. Erfindungsgemäß kann vorgesehen sein, dass die untere Strahlergruppe mehrere im Wesentlichen kreisförmige Strahler, die vorzugsweise konzentrisch in unterschiedlichen Ebenen zueinander angeordnet sind, umfasst.

Gegebenenfalls kann vorgesehen sein, dass die obere Strahlergruppe mindestens zwei Strahler, die vorzugsweise in unterschiedlichen Ebenen zueinander angeordnet sind, und/oder die untere Strahlergruppe mindestens zwei Strahler, die vorzugsweise in unterschiedlichen Ebenen zueinander angeordnet sind, umfasst.

Durch die verschieden geformten Strahler und deren Anordnung in unterschiedlichen Ebenen kann die Form eines Bauteils, vorzugsweise eines Lenkrades, nachgeformt werden, sodass auch bei unregelmäßig geformten Bauteilen eine gleichmäßige berührungslose Erwärmung über die gesamte Bauteiloberfläche sichergestellt werden kann.

Erfindungsgemäß kann vorgesehen sein, dass die Vorrichtung mindestens einen Positionsüberwachungssensor, beispielsweise einen Näherungssensor, umfasst. Dadurch ist es möglich die Position eines Bauteils zu überwachen und zu überprüfen ob ein Bauteil in die Vorrichtung eingesetzt ist. Falls das Bauteil nicht korrekt in der Vorrichtung positioniert ist oder kein Bauteil in der Vorrichtung vorhanden ist, kann der Aufheizvorgang, insbesondere automatisiert, gestoppt werden.

Gegebenenfalls kann vorgesehen sein, dass die Vorrichtung mindestens einen Temperatursensor umfasst. Durch den Temperatursensor kann die Oberflächentemperatur des Bauteils, insbesondere kontinuierlich und automatisiert, überwacht, kontrolliert und protokolliert werden. Aus den aufgenommenen Daten kann für das jeweilige Bauteil eine Optimierung des Erwärmungsvorganges durchgeführt werden. Dadurch kann es möglich sein die Aufheizzeit für das jeweilige Bauteil zu verkürzen.

Gegebenenfalls kann vorgesehen sein, dass die Vorrichtung mindestens eine Überwachungskamera umfasst. Durch diese Überwachungskamera kann, insbesondere automatisiert, ein Oberflächenabgleich mit einem abgespeicherten Masterstück vorgenommen und/oder ein Belegfoto als Qualitätsbeweis erstellt werden.

Erfindungsgemäß kann vorgesehen sein, dass die Vorrichtung sowohl für eine manuelle als auch für eine automatisierte Zufuhr des Bauteils ausgeführt ist.

Erfindungsgemäß kann vorgesehen sein, dass die Vorrichtung für eine Beaufschlagung des Bauteils mit Dampf, insbesondere mit Wasserdampf, ausgeführt ist. Zu diesem Zweck kann insbesondere vorgesehen sein, dass die oberen und/oder unteren Strahlergruppen als Dampfdüsen ausgeführt sind oder Dampfdüsen umfassen. Dadurch ist es unter anderem möglich, für die Verklebung eines Bauteils mit seiner Ummantelung wasserbasierende Kleber einsetzten zu können.

Erfindungsgemäß kann vorgesehen sein, dass die Vorrichtung einen starren Unterteil und einen relativ dazu beweglichen Oberteil umfasst, die einen Bauteilaufnahmeraum definieren, wobei in diesem Bauteilaufnahmeraum eine bewegliche Bauteilaufnahmevorrichtung vorgesehen ist, wobei der Bauteilaufnahmeraum in einer ersten Position des beweglichen Oberteils geschlossen und in einer zweiten Position des beweglichen Oberteils geöffnet ist, wobei die Bauteilaufnahmevorrichtung durch den mechanischen Verbund von einer ersten Position im offenen Zustand des Bauteilaufnahmeraums in eine zweite Position im geschlossenen Zustand des Bauteilaufnahmeraums bringbar ist.

Erfindungsgemäß kann vorgesehen sein, dass der bewegliche Oberteil an den starren Unterteil annäherbar und/oder vorzugsweise äquidistant zum starren Unterteil relativ zum starren Unterteil verschiebbar ist. Dadurch kann der bewegliche Oberteil an den starren Unterteil angenähert werden.

Erfindungsgemäß kann insbesondere vorgesehen sein, dass ein mechanischer Verbund vorgesehen ist, der das bewegliche Oberteil mit der Bauteilaufnahmevorrichtung derart verbindet, dass er die Bauteilaufnahmevorrichtung durch Aufklappen, durch vertikale Verschiebung oder durch horizontale Verschiebung des beweglichen Oberteils relativ zum starren Unterteil von einer ersten Position in eine zweite Position bringt. Eine vertikale Verschiebung bezeichnet vorzugsweise eine Verschiebung in einer Ebene, welche im Wesentlichen normal auf die Ebene der Bauteilaufnahmevorrichtung ist. Eine horizontale Verschiebung bezeichnet eine Verschiebung in einer Ebene, welche im Wesentlichen parallel zur Ebene der Bauteilaufnahmevorrichtung ist.

Der mechanische Verbund kann insbesondere in Form einer drehbar gelagerten Hebelanordnung ausgeführt sein, der eine Kippbewegung oder translatorische Bewegung des Oberteils in eine vertikale Bewegung der Bauteilaufnahmevorrichtung übersetzt.

Erfindungsgemäß kann vorgesehen sein, dass sich die Bauteilaufnahmevorrichtung in der ersten Position unterhalb der unteren Strahlergruppe befindet, und in der zweiten Position oberhalb der unteren Strahlergruppe befindet, sodass das Bauteil in der zweiten Position leicht entnehmbar ist.

Erfindungsgemäß kann vorgesehen sein, dass im beweglichen Oberteil eine obere Aufnahmevorrichtung und im starren Unterteil eine untere Aufnahmevorrichtung vorgesehen ist. Die beiden Aufnahmevorrichtungen können insbesondere zur Aufnahme von Temperatursensoren und/oder Kameras ausgeführt sein.

Da durch die Vorrichtung die Wärmeeinbringung gezielt und gut dosierbar ist, ermöglicht diese Vorrichtung auch die Verwendung wasserbasierender Kleber. Dadurch kann die mühsame und zeitaufwendige manuelle Aufrauhung des Rohlings als Arbeitsgang völlig entfallen.

Weitere erfindungsgemäße Merkmale ergeben sich aus den Ansprüchen, der Beschreibung der Ausführungsbeispiele und den Figuren.

Die Erfindung wird nun am Beispiel exemplarischer, nicht ausschließlicher, Ausführungsbeispiele näher erläutert. Fig. 1 zeigt eine schematische Darstellung einer ersten Ausführungsform einer erfindungsgemäßen Vorrichtung, Fig. 2 - 5 zeigen eine zweidimensionale Schnittdarstellung dieser Ausführungsform und Fig. 6 - 7 zeigen eine perspektivische Ansicht dieser Ausführungsform.

Die Vorrichtung umfasst einen statischen Unterteil 1, in den die Führung der Aufnahmevorrichtung für die Bauteilzentrierung vorzugsweise Lenkradnabe 2 für eine vertikale Hub- und Senkbewegung des Bauteils vorzugsweise Lenkrad 3 integriert ist. Dieser statische Unterteil der Vorrichtung weist auch im Inneren eine variable Aufnahme 4 auf, auf der die jeweiligen unteren Strahlergruppen 5, 5', 5" montiert sind. Des Weiteren können in diesem Teil auch Überwachungssensoren 6 positioniert sein, die die korrekte Positionierung des Bauteils vorzugsweise Lenkrad 3 überwachen.

Zusätzlich ist die Vorrichtung mit einem beweglichen Oberteil 11 zur zentralen Aufnahme 7 der oberen Strahlerbestückung 8, 8' sowie der jeweiligen Temperatursensoren 9 ausgestattet. Dieser bewegliche Oberteil 11 ist über einen mechanischen Verbund 10 mit der vertikalen Hub- und Senkvorrichtung der Bauteilaufnahme 2 derart verbunden, dass diese bei geöffneter Vorrichtung angehoben ist und eine einfache Beschickung der Vorrichtung ermöglicht.

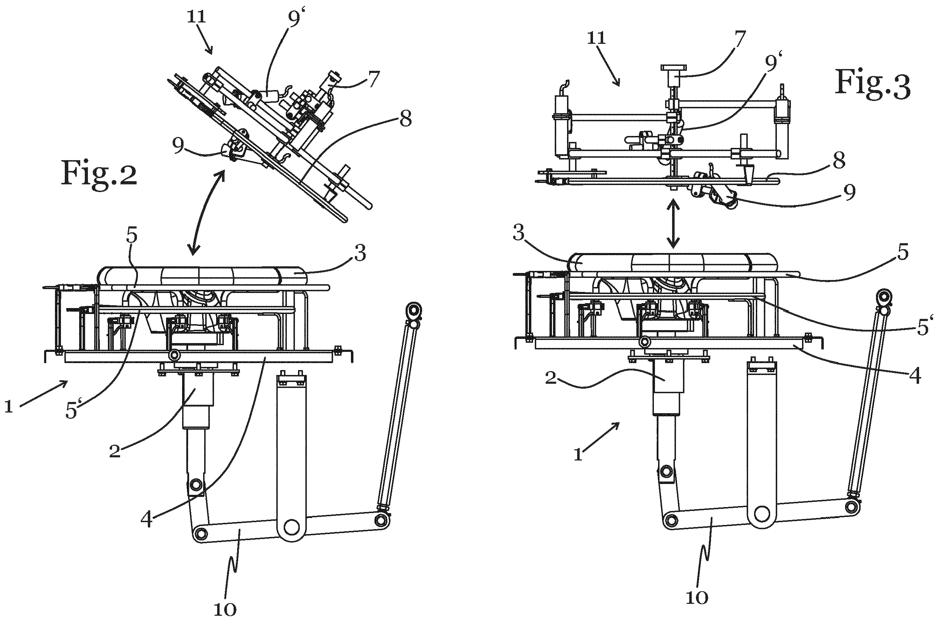

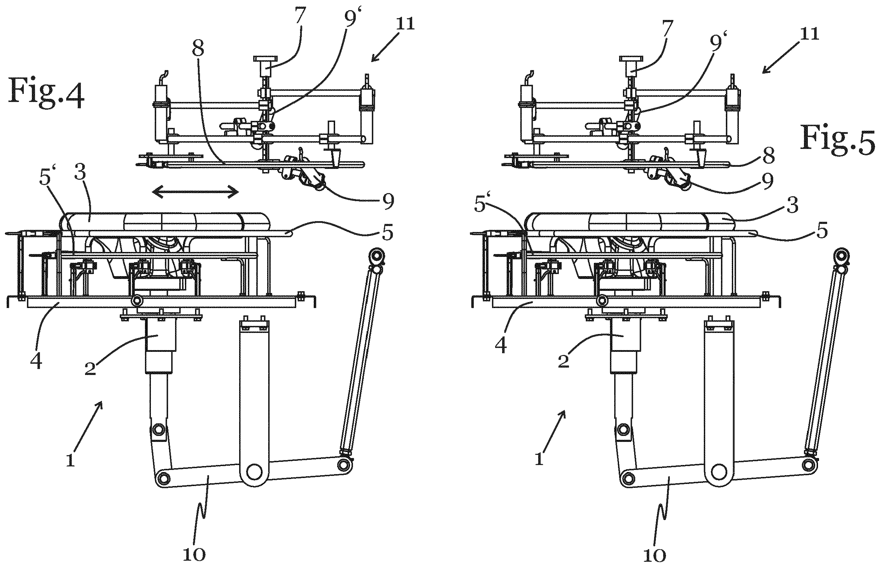

Der bewegliche Oberteil 11 der Vorrichtung kann entweder vertikal geschwenkt (Fig. 2), gehoben (Fig. 3) oder linear verschoben (Fig. 4) bzw. horizontal geschwenkt werden, um den Beschickungsbereich frei zugänglich zu machen.

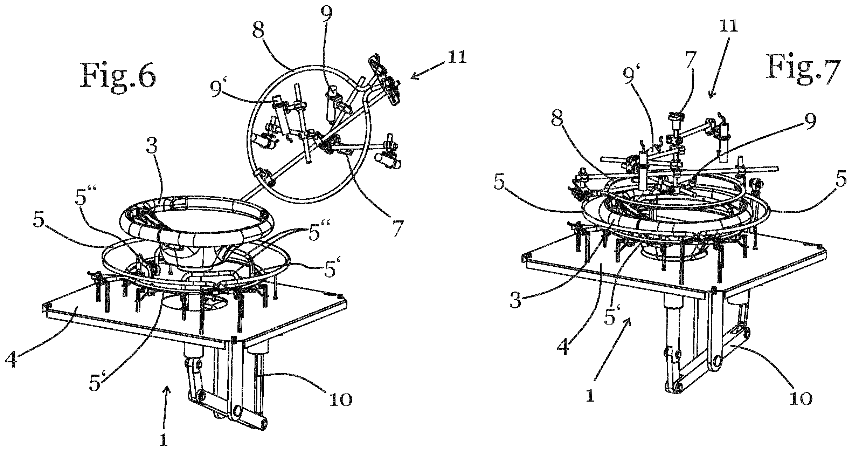

Wenn der bewegliche Oberteil 11 die Vorrichtung verschließt, senkt sich der Bauteil vorzugsweise Lenkrad 3 in die jeweilige Bearbeitungsposition (Fig. 7) und die oberen Strahler 8, 8' werden in die exakte Bestrahlposition (Fig. 5 / Fig. 7) gebracht. Durch die Strahleranordnung von unten, seitlich und von oben, wird die Werkstückkontur vorzugsweise Lenkradkontur von allen Seiten (360°) gezielt erwärmt, die Ummantelung (z.B.: Leder) gespannt und gleichzeitig verklebt.

Zusätzlich kann über der Vorrichtung eine Kamera installiert werden, welche nach dem Öffnen einen Oberflächenabgleich mit einem abgespeicherten Masterstück vornimmt und bei Abweichungen gegebenenfalls eine Nachbehandlung des erkannten Mangels durch neuerliche Erwärmung der spezifischen Stelle initiiert. Zum Abschluss kann dann durch diese Kamera ein Belegfoto mit Zuordnung zum spezifischen Bauteil vorzugsweise Lenkrad erstellt werden, welches als Qualitätsbeleg dienen kann.
Die Beschickung der Vorrichtung kann sowohl manuell als auch automatisch mittels Beschickungsroboters vorgenommen werden.

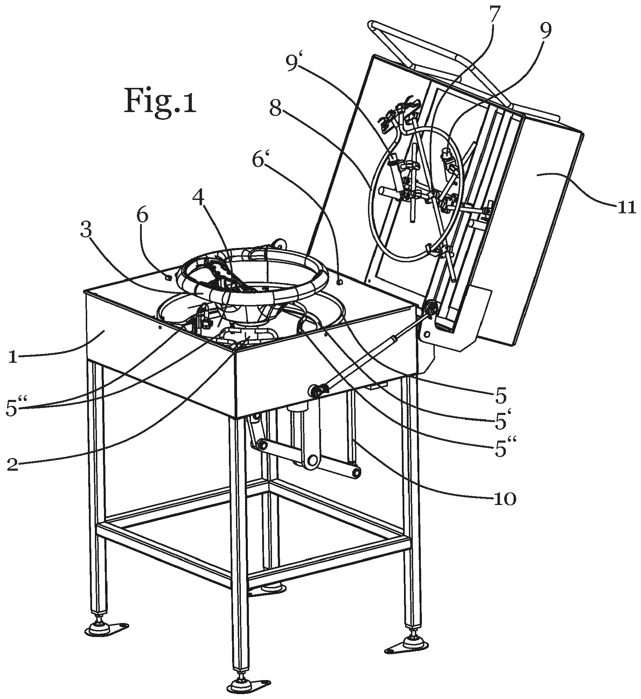

Im Detail zeigt Fig. 1 eine schematische Darstellung einer ersten Ausführungsform einer erfindungsgemäßen Vorrichtung in einer perspektivischen Ansicht. Das starre Unterteil 1 ist über einen seitlich angeordneten Teleskoparm mit einem Oberteil 11 verbunden. Das Oberteil 11 kann über ein Scharnier relativ auf das Unterteil 1 geklappt werden, wobei das Unterteil 1 und das Oberteil 11 im geschlossenen Zustand einen Aufnahmeraum zur Aufnahme eines Bauteils 3 bilden.

In dem starren Unterteil 1 ist eine untere Aufnahmevorrichtung 4 zur Halterung der unteren Strahlergruppen 5, 5', 5" vorgesehen. Bei den Strahlergruppen 5, 5', 5" handelt es sich um verschieden ausgeführte Infrarot-Strahler, nämlich kreisförmige, konzentrisch in unterschiedlichen Ebenen angeordnete Infrarot-Strahler 5, 5' sowie kreisabschnittförmig angeordnete Infrarot-Strahler 5". Die Anzahl und Ausformung der Strahlergruppen 5, 5', 5" ist der Form des jeweilig zu bearbeitenden Bauteils 3 angepasst.

Das Bauteil 3 selbst ist im starren Unterteil 1 an einer Bauteilaufnahmevorrichtung 2 lösbar befestigt, beispielsweise eingelegt oder eingeklemmt. Die Bauteilaufnahmevorrichtung 2 ist zur Aufnahme derartiger Bauteile ausgeführt und hält im vorliegenden Ausführungsbeispiel ein Lederlenkrad 3. Die Bauteilaufnahmevorrichtung 2 ist über einen mechanischen Verbund 10, der sich unterhalb des Unterteils 1 befindet, mit dem beweglichen Oberteil 11 gekoppelt und ist vertikal heb- und senkbar. Der mechanische Verbund 10 ist als drehbar gelagerte Hebelanordnung ausgeführt, die eine Kippbewegung des Oberteils 11 in eine vertikale Bewegung der Bauteilaufnahmevorrichtung 2 übersetzt.

Über den mechanischen Verbund 10 ist die Bauteilaufnahmevorrichtung 2 durch das Zuklappen des beweglichen Oberteils 11 und somit der Schließung des Bauteilaufnahmeraums in vertikaler Richtung von einer ersten Position im zugeklappten Zustand nach oben in eine zweite Position im aufgeklappten Zustand bringbar. Die Bauteilaufnahmevorrichtung 2 befindet sich in Fig. 1 in der zweiten Position und überragt die untere Strahlergruppe 5. Dadurch kann das Lederlenkrad 3 in dieser Position leicht aus der Vorrichtung entnommen werden.

Durch das Zuklappen des Oberteils 11 wird die Bauteilaufnahmevorrichtung 2 von der zweiten Position vertikal nach unten in die erste Position verschoben. Die vertikale Verschiebung der Bauteilaufnahmevorrichtung 2 ist in Fig. 1 durch einen Doppelpfeil angedeutet.

In der ersten Position ist der Bauteilaufnahmeraum geschlossen und die Strahlergruppen 5, 5', 5", 8 können unmittelbar auf die Oberfläche des Bauteils 3 einwirken.

Im starren Unterteil 1 sind Positionsüberwachungssensoren 6, 6' angeordnet, welche insbesondere als Näherungssensoren ausgeführt sind. Durch diese kann die korrekte Positionierung des Bauteils 3 überwacht werden. Im beweglichen Oberteil 11 ist die obere Aufnahmevorrichtung 7, welche die obere Strahlergruppe 8 trägt, angeordnet. An der oberen Aufnahmevorrichtung 7 sind weiters Temperatursensoren 9, 9' angeordnet. Als obere Strahlergruppe 8 ist im vorliegenden Ausführungsbeispiel ein im Wesentlichen kreisförmiger Infrarot-Strahler vorgesehen, es können aber auch andere Formen und Anordnungen zur gewünschten Bestrahlung des Bauteils 3 vorgesehen sein.

Fig. 2 zeigt eine zweidimensionale Schnittdarstellung durch die Ausführungsform aus Fig. 1 während des Zuklappens des Oberteils 11. Aus Gründen der Übersichtlichkeit werden der starre Unterteil 1 und der bewegliche Oberteil 11 nicht gezeigt.

Aus dieser Figur ist ersichtlich, dass der bewegliche Oberteil 11 durch eine Klappbewegung an den starren Unterteil 1 annäherbar ist, wobei die Bauteilaufnahmevorrichtung 2 durch den mechanischen Verbund 10 aus der zweiten Position vertikal nach unten in die erste Position verschoben wird. Bei dem mechanischen Verbund 10 handelt es sich im vorliegenden Ausführungsbeispiel um eine Hebelanordnung mit einem Drehgelenk, welche die Drehbewegung des Oberteils 11 in eine vertikale Hub- oder Senkbewegung der Bauteilaufnahmevorrichtung 2 übersetzt.

Fig. 3 zeigt eine weitere zweidimensionale Schnittdarstellung durch eine erfindungsgemäße Ausführungsform. Diese Figur zeigt, dass der bewegliche Oberteil 11 auch im zugeklappten Zustand durch vertikale Verschiebung an den starren Unterteil 1 annäherbar ist.

Fig. 4 zeigt eine weitere zweidimensionale Schnittdarstellung durch eine erfindungsgemäße Ausführungsform. Diese Figur zeigt, dass der bewegliche Oberteil 11 an den starren Unterteil 1 auch durch horizontale Verschiebung annäherbar ist. Die Bauteilaufnahmevorrichtung 2 ist wiederum über einen mechanischen Verbund 10 mit dem beweglichen Oberteil 11 gekoppelt.

Fig. 5 zeigt eine weitere zweidimensionale Schnittdarstellung durch die Ausführungsform. Diese Figur zeigt eine erste Ausführungsform der erfindungsgemäßen Vorrichtung, wobei der Bauteilaufnahmeraum geschlossen ist. In dem starren Unterteil 1 ist eine untere Aufnahmevorrichtung 4, eine untere Strahlergruppe 5, 5', 5" und eine Bauteilaufnahmevorrichtung 2, welche einen Bauteil 3 trägt und sich in der ersten Position befindet, angeordnet. Die Bauteilaufnahmevorrichtung 2 ist über einen mechanischen Verbund 10 mit dem beweglichen Oberteil 11 gekoppelt. Im beweglichen Oberteil 11 sind eine obere Aufnahmevorrichtung 7, eine obere Strahlergruppe 8 und zwei Temperatursensoren 9, 9' angeordnet.

Fig. 6 zeigt eine perspektivische Ansicht der Ausführungsform. Aus Gründen der Übersichtlichkeit werden der starre Unterteil 1 und der bewegliche Oberteil 11 nicht gezeigt. Diese Figur zeigt den beweglichen Oberteil 11 in einer zweiten Position und somit den geöffneten Bauteileaufnahmeraum.

Durch die Öffnung des beweglichen Oberteils 11 wird auch die Bauteilaufnahmevorrichtung 2 in eine zweite Position gebracht, wodurch der Bauteil 3 leicht von der Bauteilaufnahmevorrichtung 2 abgenommen werden kann. Im starren Unterteil 1 ist eine untere Aufnahmevorrichtung 4, eine untere Strahlergruppe 5, 5', 5" und eine Bauteilaufnahmevorrichtung 2, welche einen Bauteil 3 aufnehmen kann, angeordnet. Die Bauteilaufnahmevorrichtung 2 ist mit einem mechanischen Verbund 10 mit dem beweglichen Oberteil 11 gekoppelt. Im beweglichen Oberteil 11 sind eine obere Aufnahmevorrichtung 7, eine obere Strahlergruppe 8 und zwei Temperatursensoren 9, 9' angeordnet.

Fig. 7 zeigt eine perspektivische Ansicht der Ausführungsform. Aus Gründen der Übersichtlichkeit werden der starre Unterteil 1 und der bewegliche Oberteil 11 nicht gezeigt. Diese Figur zeigt den beweglichen Oberteil 11 in seiner ersten Position und somit den geschlossenen Bauteileaufnahmeraum. Durch die Schließung des beweglichen Oberteils 11 wird auch die Bauteilaufnahmevorrichtung 2 vertikal nach unten in eine erste Position gebracht. Die Bauteilaufnahmevorrichtung 2 ist mit einem mechanischen Verbund 10 mit dem beweglichen Oberteil 11 gekoppelt.

Aus Fig. 7 ist ersichtlich, dass der mechanische Verbund 10 aus mehreren, gelenkig verbundenen Hebeln besteht, um die Drehbewegung des Oberteils 11 in eine lineare Hub- und Senkbewegung der Bauteilaufnahmevorrichtung umzuwandeln.

In nicht dargestellten Ausführungsformen sind nur im beweglichen Oberteil 11, oder nur im starren Unterteil 1 Strahlergruppen angeordnet. In weiteren nicht dargestellten Ausführungsformen sind ein oder mehrere Temperatursensoren 9, 9' im starren Unterteil 1 angeordnet. In weiteren nicht dargestellten Ausführungsformen sind ein oder mehrere Positionsüberwachungssensoren 6, 6', insbesondere Näherungssensoren, im beweglichen Oberteil 11 angeordnet. In weiteren nicht dargestellten Ausführungsformen sind ein oder mehrere Überwachungskameras im beweglichen Oberteil 11 und/oder im starren Unterteil 1 angeordnet. In weiteren nicht dargestellten Ausführungsformen ist die Bauteilaufnahmevorrichtung 2 in einem starren Oberteil vorgesehen, wobei die Bauteilaufnahmevorrichtung über einen mechanischen Verbund mit einem beweglichen Unterteil gekoppelt ist.

In einer weiteren nicht dargestellten Ausführungsform ist der mechanische Verbund 10 zur Kopplung des Oberteils oder des Unterteils mit der beweglichen Bauteilaufnahmevorrichtung als elektrischer, hydraulischer oder pneumatischer Verbund ausgeführt.

### Bezugszeichenliste:

- 1: Starrer Unterteil
- 2: Bauteilaufnahmevorrichtung
- 3: Bauteil
- 4: Untere Aufnahmevorrichtung
- 5, 5', 5": Untere Strahlergruppe
- 6, 6': Positionsüberwachungssensor
- 7: Obere Aufnahmevorrichtung
- 8: Obere Strahlergruppe
- 9, 9': Temperatursensor
- 10: Mechanischer Verbund
- 11: Beweglicher Oberteil

## Patentansprüche

1. Vorrichtung zur berührungslosen Oberflächenerwärmung von ummantelten Bauteilen (3), vorzugsweise Lederlenkrädern, durch Infrarotstrahlung, wobei die Vorrichtung einen beweglichen Oberteil (11) und einen starren Unterteil (1) sowie eine heb- und senkbare Bauteilaufnahmevorrichtung (2) umfasst, **dadurch gekennzeichnet, dass** im Oberteil (11) eine obere Strahlergruppe (8) und im Unterteil (1) eine untere Strahlergruppe (5, 5', 5") angeordnet ist.

2. Vorrichtung nach Anspruch 1, **dadurch gekennzeichnet, dass** mindestens ein Strahler der oberen Strahlergruppe (8) als Infrarotstrahler, Heißluftdüse oder dergleichen ausgeführt ist.

3. Vorrichtung nach Anspruch 1 oder 2, **dadurch gekennzeichnet, dass** mindestens ein Strahler der unteren Strahlergruppe (5, 5', 5") als Infrarotstrahler, Heißluftdüse oder dergleichen ausgeführt ist.

4. Vorrichtung nach einem der Ansprüche 1 bis 3, **dadurch gekennzeichnet, dass** die obere Strahlergruppe (8) mindestens einen im Wesentlichen kreisförmigen, kreisabschnittsförmigen oder linearen Strahler umfasst.

5. Vorrichtung nach einem der Ansprüche 1 bis 4, **dadurch gekennzeichnet, dass** die untere Strahlergruppe (5, 5', 5") mindestens einen im Wesentlichen kreisförmigen, kreisabschnittsförmigen oder linearen Strahler umfasst.

6. Vorrichtung nach einem der Ansprüche 1 bis 5, **dadurch gekennzeichnet, dass** die obere Strahlergruppe (8) mehrere im Wesentlichen kreisförmige Strahler, die vorzugsweise konzentrisch in unterschiedlichen Ebenen zueinander angeordnet sind, umfasst.

7. Vorrichtung nach einem der Ansprüche 1 bis 6, **dadurch gekennzeichnet, dass** die untere Strahlergruppe (5, 5', 5") mehrere im Wesentlichen kreisförmige Strahler, die vorzugsweise konzentrisch in unterschiedlichen Ebenen zueinander angeordnet sind, umfasst.

8. Vorrichtung nach einem der Ansprüche 1 bis 7, **dadurch gekennzeichnet, dass** die Vorrichtung mindestens einen Positionsüberwachungssensor (6, 6'), vorzugsweise mindestens einen Temperatursensor (9, 9') und vorzugsweise mindestens eine Überwachungskamera umfasst.

9. Vorrichtung nach einem der Ansprüche 1 bis 8, **dadurch gekennzeichnet, dass** die Vorrichtung sowohl für eine manuelle als auch für eine automatisierte Zufuhr des Bauteils (3) ausgeführt ist.

10. Vorrichtung nach einem der Ansprüche 1 bis 9, **dadurch gekennzeichnet, dass** die Vorrichtung für eine Beaufschlagung des Bauteils (3) mit Dampf, insbesondere mit Wasserdampf, ausgeführt ist.

11. Vorrichtung nach einem der Ansprüche 1 bis 10, **dadurch gekennzeichnet, dass** die Vorrichtung einen starren Unterteil (1) und einen relativ dazu beweglichen Oberteil (11) umfasst, die einen Bauteilaufnahmeraum definieren, wobei in diesem Bauteilaufnahmeraum eine bewegliche Bauteilaufnahmevorrichtung (2) vorgesehen ist, wobei der Bauteilaufnahmeraum in einer ersten Position des beweglichen Oberteils (11) geschlossen und in einer zweiten Position des beweglichen Oberteils (11) geöffnet ist, wobei die Bauteilaufnahmevorrichtung (2) über einen mechanischen Verbund (10) von einer ersten Position im offenen Zustand des Bauteilaufnahmeraums in eine zweite Position im geschlossenen Zustand des Bauteilaufnahmeraums bringbar ist.

12. Vorrichtung nach einem der Ansprüche 1 bis 11, **dadurch gekennzeichnet, dass** der bewegliche Oberteil (11) an den starren Unterteil (1) annäherbar und/oder vorzugsweise äquidistant zum starren Unterteil (1) relativ zum starren Unterteil (1) verschiebbar ist.

13. Vorrichtung nach einem der Ansprüche 1 bis 12, **dadurch gekennzeichnet, dass** ein mechanischer Verbund (10) vorgesehen ist, der das bewegliche Oberteil (11) mit der Bauteilaufnahmevorrichtung (2) derart verbindet, dass er die Bauteilaufnahmevorrichtung (2) beim Aufklappen, bei vertikaler Verschiebung oder bei horizontaler Verschiebung des beweglichen Oberteils (11) relativ zum starren Unterteil (1) von einer ersten Position in eine zweite Position bewegt.

14. Vorrichtung nach Anspruch 13, **dadurch gekennzeichnet, dass** sich die Bauteilaufnahmevorrichtung (2) in der ersten Position unterhalb der unteren Strahlergruppe (5, 5', 5") befindet, und in der zweiten Position oberhalb der unteren Strahlergruppe (5, 5', 5") befindet, sodass das Bauteil (3) in der zweiten Position leicht entnehmbar ist.

15. Vorrichtung nach einem der Ansprüche 1 bis 14, **dadurch gekennzeichnet, dass** im beweglichen Oberteil (11) eine obere Aufnahmevorrichtung (7) und im starren Unterteil (1) eine untere Aufnahmevorrichtung (4) vorgesehen ist.
